# EUROPEAN PATENT APPLICATION

(11) **EP 4 299 177 A1**
(43) Date of publication of application: **03.01.2024**
(21) Application number: 22759302.7
(22) Date of filing: 01.02.2022
(51) Int. Cl.: B01J 35/10, H01M 4/88, H01M 4/92, H01M 4/96, B01J 37/16, H01M 8/10, B01J 23/42

(54) **ELECTRODE CATALYST, MANUFACTURING METHOD THEREFOR, AND FUEL CELL**

(30) Priority: 26.02.2021 JP 2021030711
(71) Applicant: Mitsui Mining & Smelting Co., Ltd., Shinagawa-ku Tokyo 141-8584 (JP)
(72) Inventor: SUGAHARA, Kosei, Ageo-shi, Saitama 362-0021 (JP); FUJINO, Takaaki, Ageo-shi, Saitama 362-0021 (JP); OSAKO, Takao, Ageo-shi, Saitama 362-0021 (JP); KITABATAKE, Takuya, Ageo-shi, Saitama 362-0021 (JP); WATANABE, Hiromu, Ageo-shi, Saitama 362-0021 (JP)
(74) Representative: Novagraaf Technologies
(86) International application number: PCT/JP2022/003895
(87) International publication number: WO 2022/181261

(57) **Abstract**

An object of the present invention is to provide an electrode catalyst in which degradation of catalytic action over time is suppressed, a method for producing the same, and a fuel cell. An electrode catalyst includes a mesoporous carbon support having pores, and catalyst metal particles supported in at least some of the pores. The ratio r/R of the mean particle size r of the catalyst metal particles to the modal pore size R of the pores is from 0.01 to 0.6, and the mean particle size r is 6 nm or less. The modal pore size R of the pores is preferably from 2 to 50 nm.

## Description

### Technical Field

The present invention relates to an electrode catalyst and a method for producing the same. Also, the present invention relates to a fuel cell.

### Background Art

In electrochemical cells such as solid polymer fuel cells and water electrolysis apparatuses, a catalyst-supporting support in which a noble metal catalyst such as platinum is supported on a support is used as an electrode catalyst. From the viewpoint of efficient use of the catalyst, a carbonaceous material that is a material with a large specific surface area is often used as the catalyst support.

For example, Patent Literatures 1 to 3 propose use of a porous carbon material as the catalyst support, wherein catalyst particles are supported in pores of the porous carbon material. According to Patent Literatures 1 to 3, as a result of the catalyst particles being supported in the pores, the catalyst is unlikely to come into contact with an ionomer, and poisoning of the catalyst by the ionomer is thus reduced.

### Citation List

### Patent Literature

Patent Literature 1: WO 2014/175099
Patent Literature 2: US 2020/075964A1
Patent Literature 3: US 2020/127299A1

### Summary of Invention

However, the technologies disclosed in Patent Literatures 1 to 3 are not capable of reliably suppressing elution of a metal constituting the catalyst, or aggregation of catalyst particles, over time of use and tend to result in a decrease in catalytic action.

Accordingly, it is an object of the present invention to provide an electrode catalyst in which degradation of catalytic action over time is suppressed, a method for producing the same, and a fuel cell using the same.

The present invention provides an electrode catalyst including a mesoporous carbon support having pores, and catalyst metal particles supported in at least some of the pores,
wherein a ratio r/R of a mean particle size r of the catalyst metal particles to a modal pore size R of the pores is from 0.01 to 0.6, and the mean particle size r is 6 nm or less.

The present invention also provides a method for producing an electrode catalyst, the method including:
freezing a dispersion liquid containing a mesoporous carbon support having pores, a catalyst metal source compound, and a liquid medium capable of reducung the catalyst metal source compound, to obtain a frozen body;
deaerating a system containing the frozen body to allow the system to be in a reduced pressure state;
thawing the frozen body to obtain a dispersion liquid while maintaining the reduced pressure state; and
heating the dispersion liquid to form catalyst metal particles from the catalyst metal source compound.

### Description of Embodiments

Hereinafter, the present invention will be described based on a preferred embodiment thereof. The present invention relates to an electrode catalyst. The electrode catalyst of the present invention includes a support and catalyst metal particles supported on the support. The electrode catalyst of the present invention can be suitably used in, for example, electrodes of various type of fuel cells. Specifically, the electrode catalyst of the present invention can be used in an anode electrode catalyst layer and/or a cathode electrode catalyst layer of a solid polymer fuel cell or a phosphoric acid fuel cell. Alternatively, the electrode catalyst of the present invention can be used in an anode electrode catalyst layer and/or a cathode electrode catalyst layer of a water electrolysis apparatus.

The support included in the electrode catalyst is constituted by particles of a mesoporous structure having pores. The mesoporous structure is preferably a porous structure having mesoscale pores, that is, pores with a modal pore size of 2 nm or greater and 50 nm or less in terms of diameter. As a result of having mesoscale pores, the support has an increased surface area, and thus, catalyst metal particles smaller than the pore size can be favorably supported in the pores. A preferred method for measuring the pore size will be described in detail in Examples, which will be described later.

The pores formed in the support are open at the surface of the support and extend into the interior of the support. The support has a plurality of pores formed therein. The pores may be open at the surface of the support and terminate in the interior of the support. That is to say, the pores may be non-through holes. Alternatively, the pores may be open at the surface of the support at one end, extend through the interior of the support, and also be open at the surface of the support at the other end. That is to say, the pores may be through holes.

The extent to which the support is porous can be evaluated using, as a measure, the ratio of the total pore surface area S_{P} per unit mass of the support to the total surface area S_{A} per unit mass of the support. In the present invention, this ratio (also referred to as "pore inner surface area ratio") is preferably 80% or greater because this enables a sufficient amount of catalyst metal particles to be supported. From this viewpoint, the pore inner surface area ratio is more preferably 85% or greater, and even more preferably 90% or greater.

When a carbon material is used, the pore inner surface area ratio of the support is preferably 99% or less because the carbon material is sufficiently durable.

The pore inner surface area ratio of the support is defined as [total pore surface area per unit mass of support S_{P} (m²/g)/total surface area per unit mass of support S_{A} (m²/g)]×100. A preferred method for measuring the pore inner surface area ratio of the support will be described in detail in Examples, which will be described later.

The support preferably has an acidic group on its surface. As used herein, the acidic group refers to a functional group that is capable of releasing a proton. Examples of the acidic group include a hydroxyl group, a lactone group, and a carboxyl group. The "surface of the support" means both the outer surface of particles of the support and the inner surface of pores thereof.

The support having an acidic group is advantageous in that hydrophilicity is imparted to the surface of the support, resulting in an improvement in proton transport properties. The improvement in proton transport properties contributes to better usability of the catalyst metal particles.

From the viewpoint of making these advantages more marked, the amount of acidic group present on the support is preferably 0.05 mmol/g or greater, more preferably 0.07 mmol/g or greater, and even more preferably 0.1 mmol/g or greater. There is no particular limitation on the upper limit of the amount of acidic group, but the amount of acidic group is typically 5 mmol/g or less.

To cause an acidic group to be present on the surface of the support, a method can be used in which, for example, the support or the electrode catalyst is immersed in an oxidizing solution containing an oxidant. However, the present invention is not limited to this method.

The amount of acidic group present on the support can be measured using a titration method in which an alkali compound is used. A preferred measurement method will be described in detail in Examples, which will be described later.

Preferably, a support containing carbon, in particular, a support containing carbon as the main component, is used as the support. The wording "containing carbon as the main component" means that the proportion of carbon in the support is 50 mass% or greater. Use of a support containing carbon advantageously improves electron conductivity of the support and decreases electric resistance.

Examples of the carbon above include a group of carbonaceous materials called carbon black. Specifically, Ketjen black (registered trademark), oil furnace black, channel black, lamp black, thermal black, acetylene black, and the like may be used. In addition, activated carbon and graphite may also be used as the carbon. In the present invention, there is no particular limitation on the type of the carbon material, and an intended effect can be achieved regardless of the type of carbon material used.

Furthermore, from the viewpoint of improving the conductivity or improving the interaction between the support and the catalyst metal, the carbon material doped with an element such as nitrogen or boron may also be used.

The catalyst metal particles are present in some or all of the pores formed in the support. Preferably, the catalyst metal particles are present at least inside the pores of the support. It is not precluded that the catalyst metal particles are present on the surface of the support, in addition to inside the pores.

Examples of catalysts that can be used include, but are not limited to, noble metals themselves and alloys containing noble metals. With regard to the alloys containing noble metals, one of noble metals listed below may be used alone, or two or more thereof may be used in combination. An alloy composed of any of the above-described noble metals and a metal other than the noble metals may also be used as the catalyst.

Any noble metal that has electrochemical catalytic activity for oxygen reduction (and hydrogen oxidation) can be suitably used in the present invention without limitation, and known materials may be used. For example, the noble metal is selected from Pt, Ru, Ir, Pd, Rh, Os, Au, Ag, and the like. The "metal other than the noble metals" is not limited to a specific metal, but is preferably a transition metal element, preferred examples of which include Sn, Ti, Ni, Co, Fe, W, Ta, Nb, and Sb. One of these metals may be used alone, or two or more thereof may be used in combination.

In particular, in order to obtain high oxygen reduction activity, it is preferable that the catalyst metal particles contain at least a platinum group element, the catalyst metal particles consist of a platinum group element, or the catalyst metal particles consist of an alloy of a platinum group element and a transition metal element. In this specification, platinum group elements refer to Pt, Ir, Os, Pd, Rh, and Ru. When the electrode catalyst of the present invention is used in a fuel cell, if pure hydrogen alone is used as a fuel gas, a simple substance consisting of one of the above-listed platinum group elements can be used alone as the catalyst. However, if a reformed gas is used as the fuel gas, it is effective to add another metal element, such as a transition metal element, in order to prevent CO poisoning.

Among catalysts containing a platinum group element as described above, Pt and alloys containing Pt have high electrochemical catalytic activity for oxygen reduction (and hydrogen oxidation) in a temperature range around 80°C, which is the working temperature of a solid polymer fuel cell, and can therefore be particularly suitably used.

One of the features of the present invention is the relationship between the modal pore size R of the pores formed in the support and the mean particle size r of the catalyst metal particles supported in the pores. More specifically, the value of the ratio r/R between the modal pore size R of the pores and the mean particle size r of the catalyst metal particles is preferably 0.01 or greater, because this makes it possible to effectively suppress elution of the catalyst metal particles supported in the pores. From the viewpoint of making this advantage more marked, the value of r/R is more preferably 0.03 or greater, and even more preferably 0.05 or greater.

In addition, in order to effectively use the surface of the catalyst metal particles, the value of r/R is preferably 0.6 or less. From the viewpoint of making this advantage more marked, the value of r/R is more preferably 0.5 or less, and even more preferably 0.4 or less.

Technologies for causing catalyst particles to be supported in pores of a porous support have previously been known in the art. However, the relationship between the modal pore size R of pores and the mean particle size r of catalyst metal particles supported in the pores has not been investigated so far. In particular, it was first discovered by the inventors of the present invention that setting the ratio between the modal pore size R and the mean particle size r within a specific range effectively suppresses the occurrence of a phenomenon in which the catalyst metal particles elute out of the pores, and thereby contributes to suppressing degradation of the catalyst over time.

Furthermore, a long-term performance evaluation performed using an electrode catalyst of a preferred embodiment of the present invention showed that a surprising effect unthinkable based on conventional common knowledge was achieved, that is, the catalytic activity increased with evaluation time. The reason for this is thought by the inventors of the present invention to be as follows.

In the electrode catalyst of the present invention, in which the ratio between the modal pore size R and the mean particle size r is set within a specific range, even when catalyst metal particles present in the pores dissolve while the fuel cell is operating, the metal that has dissolved is unlikely to flow out of the pores. Thus, the dissolved metal remaining in the pores is re-precipitated over time and forms a large number of catalyst metal particles having a smaller diameter than that before the dissolution, or in other words, having a significantly increased specific surface area. This is thought to cause an increase in the catalytic activity over time.

While the ratio between the modal pore size R of the pores and the mean particle size r of the catalyst metal particles is as described above, the value of the modal pore size R itself of the pores is preferably 2 nm or greater in order to allow the catalyst metal particles to be efficiently supported in the pores and in order to effectively use the entire surface of the catalyst particles supported in the pores. From the viewpoint of making these advantages more marked, the value of the modal pore size R is more preferably 4 nm or greater, even more preferably 7 nm or greater, and yet even more preferably 10 nm or greater.

In addition, in order to suppress the contact between the catalyst metal particles and the ionomer, the value of the modal pore size R of the pores is preferably 50 nm or less. From the viewpoint of making this advantage more marked, the value of the modal pore size R is more preferably 40 nm or less, even more preferably 35 nm or less, and yet even more preferably 30 nm or less.

A preferred method for measuring the modal pore size R will be described in detail in Examples, which will be described later.

On the other hand, the value of the mean particle size r of the catalyst metal particles is preferably 6 nm or less, in order to increase the initial activity of the electrode catalyst. From the viewpoint of making this advantage more marked, the value of the mean particle size r is more preferably 5 nm or less, even more preferably 4 nm or less, and yet even more preferably 3 nm or less.

A preferred method for measuring the mean particle size r of the catalyst metal particles will be described in detail in Examples, which will be described later.

In the electrode catalyst, the amount of catalyst metal particles supported is preferably from 10 to 60 mass%, particularly from 30 to 50 mass%, with respect to the mass of the support, in order to obtain sufficient catalytic ability.

In the electrode catalyst, the support, which is in particle form, preferably has a mean particle size D of 50 µm or less, because this can increase the effective surface area of the support. From this viewpoint, the mean particle size D of the support is more preferably 20 µm or less, and even more preferably 10 µm or less.

In addition, the mean particle size D of the support is preferably 0.1 µm or greater in order to form sufficient pores in the support. From this viewpoint, the mean particle size D of the support is more preferably 0.5 µm or greater, and even more preferably 1 µm or greater.

The mean particle size D of the support is measured by observing the support under an electron microscope or by using a particle size distribution analyzer. A preferred measurement method will be described in detail in Examples, which will be described later.

Note that, since the mean particle size r of the catalyst metal particles is sufficiently smaller than the mean particle size D of the support, the mean particle size of the electrode catalyst, in which the catalyst metal particles are supported on the support, can be regarded as substantially the same as the mean particle size D of the support.

Next, a preferred method for producing the electrode catalyst of the present invention will be described.

First, a support, which is one of raw materials of the electrode catalyst, or more specifically, a mesoporous carbon support having pores is prepared.

A catalyst metal source compound, which also is one of the raw materials of the electrode catalyst, is prepared along with the support. A compound appropriate for the type of the catalyst metal is selected as the catalyst metal source compound. When platinum, for example, is used as the catalyst metal, chloroplatinic acid hexahydrate (H₂PtCl₆•6H₂O), dinitrodiammine platinum (Pt(NH₃)₂(NO₂)₂), or the like can be used as the catalyst metal source compound.

In addition to the support and the catalyst metal source compound described above, a liquid medium capable of reducung the catalyst metal source compound is also prepared. Examples of the liquid medium include various alcohols, an aqueous solution of citric acid, an aqueous solution of ascorbic acid, an aqueous solution of sodium borohydride, and the like.

Of these liquid media, alcohols, which are easy to handle and have high reducing ability, are preferably used. Examples of the alcohols include monohydric lower alcohols including ethanol; polyethylene glycol; benzyl alcohol; and the like. Of these alcohols, ethanol is preferably used, because ethanol has a good balance between the ease of handling and the high reducing ability.

After the above-described raw materials are prepared, the three raw materials are mixed to obtain a dispersion liquid. The proportion of the support in the dispersion liquid is preferably set to 1 mass% or greater and 20 mass% or less of the liquid medium, because this allows the catalyst metal particles to be favorably supported on the support.

The proportion of the catalyst metal source compound in the dispersion liquid is preferably set such that the proportion of the catalyst metal source in the dispersion liquid is 10 mass% or greater and 60 mass% or less of the support, because this allows the catalyst metal particles to be favorably supported on the support.

After the preparation of the dispersion liquid is complete, the dispersion liquid is frozen to obtain a frozen body. The purpose of freezing the dispersion liquid is to allow the catalyst metal source compound to sufficiently permeate into the pores of the support in a step of thawing the frozen body, which will be described later. Therefore, it is sufficient that the dispersion liquid is converted into a solid state, and there is no particular limitation on the extent to which the dispersion liquid is frozen.

The temperature at which the dispersion liquid is frozen depends on the melting point of the liquid medium. When ethanol, for example, is used as the liquid medium, it is preferable that the dispersion liquid is cooled to -115°C or below.

There is no particular limitation on the method for freezing the dispersion liquid, and conventionally known cooling methods may be used. As a simple method, a method in which a container containing the dispersion liquid is immersed in liquid nitrogen may be used.

After the frozen body is obtained, a system containing the frozen body is deaerated to allow the system in a reduced pressure state. More specifically, the frozen body is placed in a sealed space, for example, and the sealed space is deaerated to allow the sealed space in a reduced pressure state. It is sufficient that the pressure is reduced to such an extent that the catalyst metal source compound can sufficiently permeate into the pores of the support in the step of thawing the frozen body, which will be described later. Specifically, the reduced pressure is preferably set to 1000 Pa or less, more preferably 500 Pa or less, and even more preferably 100 Pa or less, in terms of absolute pressure. There is no particular limitation on the lower limit value, but the reduced pressure is typically set to 1 Pa or higher in view of the performance of an apparatus for removing air and reducing the pressure.

After the pressure in the system containing the frozen body is reduced, the frozen body is thawed, with the reduced pressure state being maintained. As a result of the frozen body being thawed under reduced pressure, the gas present in the pores of the support is replaced with the liquid medium containing the catalyst metal source compound, and the inside of the pores is thus sufficiently filled with the liquid medium containing the catalyst metal source compound.

The reduced pressure state in the system after the frozen body has been thawed does not need to be exactly the same as the reduced pressure state in the system before thawing, and the pressure after thawing may be higher than that before thawing. However, it is advantageous that the pressure in the system is reduced to such an extent that the gas present in the pores of the support is smoothly replaced with the liquid medium containing the catalyst metal source compound. From this viewpoint, the pressure in the system after the frozen body has been thawed is preferably set to 1000 Pa or less, more preferably 500 Pa or less, and even more preferably 100 Pa or less, in terms of absolute pressure. There is no particular limitation on the lower limit value of the pressure in the system, but the pressure in the system is typically 1 Pa or higher.

The temperature of a dispersion liquid produced by thawing the frozen body needs to be such a temperature that does not allow the dispersion liquid to be reduced. The temperature of the dispersion liquid produced by thawing the frozen body is preferably 40°C or below. The thawing is preferably performed until the dispersion liquid stops foaming, by which it can be confirmed that the dispersion liquid has permeated. If foaming is still observed after performing the operation once, it is preferable to perform the above-described freezing, deaerating, and thawing steps a plurality of times until foaming is no longer observed, because this enables the dispersion liquid to permeate appropriately.

The replacement of the gas present in the pores of the support with the liquid medium containing the catalyst metal source compound is completed in a relatively short time. Then, the dispersion liquid is heated. As a result of heating, the catalyst metal source compound is reduced by the liquid medium, and catalyst metal particles are generated from the catalyst metal source compound. As described above, the liquid medium containing the catalyst metal source compound has permeated into the pores of the support, and therefore, the generation of catalyst metal particles through the reduction of the catalyst metal source compound occurs in the pores. The generation of catalyst metal particles occurs not only in the pores but also on the outer surface of the support.

The growth of the catalyst metal particles generated in the pores is restricted by the pores, and the particles can only grow to a diameter corresponding to the size of the pores. In other words, the pores function as, so to speak, "frames" for the growth of the catalyst metal particles. As a result, the catalyst metal particles are prevented from growing excessively large during a step of heating the electrode catalyst, which will be described later, and thus, a specific relationship is established between the mean particle size r of the generated catalyst metal particles and the modal pore size R of the pores.

There is no particular limitation on the heating temperature of the dispersion liquid, and any temperature that causes reduction of the catalyst metal source compound can be used. The dispersion liquid may be heated under reflux where necessary.

After the catalyst metal particles are generated in this manner, the dispersion liquid is subjected to solid-liquid separation, and solids are collected, washed, and dried. Thus, a target electrode catalyst is obtained.

The thus obtained electrode catalyst may be subjected to post-treatment. For example, the electrode catalyst may be heated to adjust the particle size of the catalyst metal particles. The particle size can be increased by growing the catalyst metal particles through heating.

Heating is preferably performed in a reducing gas atmosphere or an inert gas atmosphere, because this reduces the likelihood of the support being damaged by heating. Note that the inventors of the present invention confirmed that heat treatment of the electrode catalyst does not cause any substantial change in the mesoporous structure of the support.

Examples of the reducing gas atmosphere used for the heat treatment include a hydrogen gas atmosphere and a hydrogen-gas-containing inert gas atmosphere (e.g., a nitrogen gas atmosphere containing a hydrogen gas at a concentration below the explosion limit).

Examples of the inert gas atmosphere include a nitrogen gas atmosphere and a rare gas atmosphere such as argon.

The time and temperature of the heat treatment are appropriately set according to the atmosphere.

In the case of a reducing gas atmosphere, it is preferable that the heat treatment temperature is preferably set to 1000°C or below, more preferably 950°C or below, and even more preferably 850°C or below, because this makes it possible to favorably adjust the particle size of the catalyst metal particles to a desired value. The lower limit value is preferably set to 25°C or above, and more preferably 300°C or above, in view of workability.

The electrode catalyst obtained in this manner can be used to form an electrode catalyst layer in a fuel cell. In addition to the electrode catalyst, the electrode catalyst layer may also contain materials similar to those conventionally known in the art, such as a binding agent that binds electrode catalyst particles together, an ionomer, and the like, as necessary.

The ionomer is preferably proton conductive. As a result of the electrode catalyst layer containing an ionomer, the performance of the catalyst layer is further improved. As the ionomer, for example, it is possible to use a polymer material that has a structure in which a perfluoroether pendant side chain with a sulfonic acid group at a terminal thereof is linked to a polytetrafluoroethylene main chain. Examples of the ionomer include Nafion (registered trademark), Flemion (registered trademark), Aciplex (registered trademark), Fumion F (registered trademark), and the like.

The electrode catalyst layer can be suitably formed using the following method, for example. First, a dispersion liquid containing the electrode catalyst is prepared. To prepare the dispersion liquid, the electrode catalyst is mixed with a solvent. When mixing, an ionomer may also be added if necessary.

As the solvent used for dispersion, for example, alcohols, aromatic hydrocarbons such as toluene and benzene, aliphatic hydrocarbons such as hexane, other organic solvents such as ketones, esters, and ethers, and water can be used.

After the dispersion liquid is obtained, an electrode catalyst layer is formed from the dispersion liquid. The electrode catalyst layer is formed by, for example, applying the dispersion liquid to an application object using any type of application apparatus to form a coating film, and drying the coating film. As the application object, for example, a film of fluorine resin such as polytetrafluoroethylene, or the like can be used. The electrode catalyst layer formed on the application object is overlaid on, for example, a solid electrolyte membrane and then heat-pressed, so that the electrode catalyst layer is transferred onto the surface of the solid electrolyte membrane. As a result of the transfer, a CCM in which the electrode catalyst layer is disposed on the surface of the solid electrolyte membrane is obtained.

The electrode catalyst layer formed in this manner can be suitably used as an electrode catalyst layer of an anode and/or a cathode of a solid polymer fuel cell. Preferably, the anode and the cathode each include the electrode catalyst layer and a gas diffusion layer. The gas diffusion layer functions as a support and current collector that has a current-collecting function. Furthermore, the gas diffusion layer has the function of sufficiently supplying a gas to the electrode catalyst layer.

As the gas diffusion layer, for example, a porous material such as carbon paper or carbon cloth can be used. Specifically, for example, a carbon cloth obtained by weaving a thread made of a carbon fiber with its surface coated with polytetrafluoroethylene and a carbon fiber without the coating at a predetermined proportion can be used.

Examples of the solid electrolyte membrane include a perfluorosulfonic acid polymer-based proton conductive membrane, a hydrocarbon polymer compound doped with an inorganic acid such as phosphoric acid, an organic/inorganic hybrid polymer partially substituted with a functional group of a proton conductor, a proton conductor obtained by impregnating a polymer matrix with a phosphoric acid solution or a sulfuric acid solution, and the like.

A separator is placed on each surface of a membrane electrode assembly that includes the electrode catalyst layer, the solid electrolyte membrane, and the gas diffusion layer, and thus, a solid polymer fuel cell is obtained. For example, a separator in which a plurality of protruding portions (ribs) extending in one direction are formed at predetermined intervals on a surface opposing the gas diffusion layer can be used as the separator. Groove portions having a rectangular cross-sectional shape are formed between adjacent protruding portions. The groove portions are used as flow channels for supplying and discharging a fuel gas and an oxidant gas such as air. The fuel gas and the oxidant gas are supplied from a fuel gas supply means and an oxidant gas supply means, respectively. The separators placed on the respective surfaces of the membrane electrode assembly are preferably arranged such that the groove portions formed in one of the separators are orthogonal to the groove portions formed in the other separator. The structural element described above constitutes a minimum unit of a fuel cell, and a fuel cell can be produced from a cell stack in which several tens or several hundreds of structural elements are arranged in parallel.

### Examples

Hereinafter, the present invention will be described in further detail by way of examples. However, the scope of the present invention is not limited to the examples below.

### Example 1

### (1) Preparation of Dispersion Liquid

A mesoporous carbon support shown in Table 1 below was provided. Then, a dispersion liquid was prepared by mixing 2.6 parts by mass of the mesoporous carbon support, 16.7 parts by mass of a dinitrodiammine platinum nitrate solution serving as a catalyst metal source compound, and 80.7 parts by mass of ethanol serving as a liquid medium. The mesoporous carbon support had a pore volume of 2.0 cm³/g.

### (2) Freezing of Dispersion Liquid

A container containing the dispersion liquid was immersed in liquid nitrogen to freeze the dispersion liquid. Thus, a frozen body was obtained.

### (3) Deaerating

The frozen body was placed in a sealed container, and the sealed container was deaerated to allow the sealed container in a reduced pressure state, that is, to achieve an internal pressure of 100 Pa (absolute pressure).

### (4) Thawing of Frozen Body

With use of running water and a constant temperature bath, the frozen body was thawed and returned to the state of a dispersion liquid. The temperature of the dispersion liquid was 30°C. It was confirmed that the dispersion liquid had permeated into the support based on the fact that the dispersion liquid stopped foaming during the thawing.

### (5) Reduction Treatment

The dispersion liquid was heated to 85°C under reflux to reduce dinitrodiammine platinum, and thus, platinum particles were generated in pores of the mesoporous carbon support. Then, the dispersion liquid was subjected to solid-liquid separation, and solids were washed and dried to obtain an electrode catalyst. At this time, the pore volume was 1.2 cm³/g. The pore volume was reduced compared to that before the catalyst was supported, and therefore, it was confirmed that the catalyst metal particles were supported in the pores.

### (6) Heat Treatment

The electrode catalyst was heated at 300°C for 4 hours in a nitrogen atmosphere containing hydrogen at 4 vol% to adjust the particle size of the platinum particles.

### Example 2

The temperature of (6) Heat Treatment in Example 1 was changed to 825°C. Otherwise, the same procedures as those of Example 1 were performed. Thus, an electrode catalyst was obtained.

### Example 3

(6) Heat Treatment in Example 1 was not performed. Otherwise, the same procedures as those of Example 1 were performed. Thus, an electrode catalyst was obtained.

### Example 4

A mesoporous carbon support shown in Table 1 below was used instead of the carbon support used in Example 1. Otherwise, the same procedures as those of Example 1 were performed. Thus, an electrode catalyst was obtained.

### Example 5

A mesoporous carbon support shown in Table 1 below was used instead of the carbon support used in Example 1. Otherwise, the same procedures as those of Example 1 were performed. Thus, an electrode catalyst was obtained.

### Comparative Example 1

The temperature of (6) Heat Treatment in Example 1 was changed to 1000°C. Otherwise, the same procedures as those of Example 1 were performed. Thus, an electrode catalyst was obtained.

### Comparative Example 2

The temperature of (6) Heat Treatment in Example 4 was changed to 825°C. Otherwise, the same procedures as those of Example 4 were performed. Thus, an electrode catalyst was obtained.

### Comparative Example 3

The temperature of (6) Heat Treatment in Example 5 was changed to 1000°C. Otherwise, the same procedures as those of Example 5 were performed. Thus, an electrode catalyst was obtained.

### Comparative Example 4

ECP (trade name), a hollow Ketjen black available from Lion Corporation was used instead of the mesoporous carbon support. Otherwise, the same procedures as those of Example 1 were performed. Thus, an electrode catalyst was obtained.

### Evaluation

Methods for measuring the modal pore size R, the mean particle size D, the total surface area per unit mass, the total pore surface area per unit mass, and the amount of acidic group per unit mass, of the carbon supports used in the examples and the comparative examples were as described below.

Also, the mean particle size r and the electrochemically active surface area retention rate, of the electrode catalysts obtained in the examples and the comparative examples were measured using the following methods.

Table 1 below shows the results. Note that a value represented by - in the table means that a well-defined value was not obtained.

### Mean Particle Size D of Carbon Support

Measurement was performed using a laser diffraction scattering particle size distribution analyzer (LS 13 320 manufactured by Beckman Coulter). A dispersion liquid was prepared by adding water to a carbon support, and the dispersion liquid was exposed to ultrasonic irradiated. Then, particle size measurement was performed within a range of 0.04 µm or greater and 2000 µm or less. The ultrasonic irradiation was performed for 3 minutes using an ultrasonic device attached to a circulation system of the laser diffraction scattering particle size distribution analyzer. The number-based mean particle size was calculated and used as the mean particle size D of the carbon support.

### Modal Pore Size R, Total Surface Area, and Total Pore Surface Area of Carbon Support

The modal pore size R, the total surface area, and the total pore surface area of the carbon support were measured by analyzing a nitrogen adsorption/desorption isotherm. Nitrogen adsorption/desorption measurement was performed using a gas adsorption measurement apparatus (BELSORP-mini X manufactured by MicrotracBEL). As a pre-treatment, the carbon support was heated at 400°C for 3 hours under conditions at a reduced pressure of 10 Pa. The obtained adsorption isotherm was analyzed using the BJH (Barrett-Joyner-Halenda) method, and the modal pore size R of the carbon support within the range of 2 nm or greater and 50 nm or less was calculated. Also, the obtained adsorption isotherm was analyzed using the t-method, and the total surface area and the total pore surface area of the carbon support were calculated. Analysis software BELMaster 7 attached to the gas adsorption measurement apparatus was used.

Note that the inventors of the present invention confirmed that the modal pore size R of the electrode catalyst was substantially the same as the modal pore size R of the carbon support before supporting the catalyst.

### Amount of Acidic Group in Carbon Support

Evaluation was performed in accordance with the method described in Boehm, H.P., Advances in Catalysis, 16 179(1966). Calculation was performed by back titration using an automatic titrator (AT-710WIN manufactured by Kyoto Electronics Manufacturing Co., Ltd.). To 0.5 g of a sample was added 80 mL of a 0.05 mol/L aqueous solution of sodium hydroxide, the mixture was stirred in a nitrogen atmosphere and then allowed to stand at room temperature, and a filtrate was subjected to back titration with 0.025 mol/L hydrochloric acid.

### Mean Particle Size r of Platinum Particles

The platinum particles were observed using a transmission electron microscope (TEM). JEM-2100F manufactured by JEOL Ltd. was used as the TEM. During the observation, the magnification was set to 200,000 times. The area of a particle in an obtained TEM image was obtained using image software (ImageJ), and the particle size of that particle was calculated assuming that the particle was spherical. Particle sizes of 200 or more and 300 or less particles were obtained, and the arithmetic mean value of the obtained particle sizes was used as the mean particle size r of the platinum particles.

### Electrochemically Active Surface Area (ECSA) Retention Rate

### (1) Preparation of Electrode

A glassy carbon (GC) disk electrode with a diameter of 5 mm was polished using a 0.05 µm alumina paste, followed by ultrasonic cleaning using pure water. Separately from this operation, the electrode catalyst was added to a 90 vol% aqueous ethanol solution and dispersed using an ultrasonic homogenizer.

The dispersion liquid was applied onto the GC disk electrode to such a density that the amount of Pt metal per unit area of the disk was 12 µg-Pt/cm²-GC, and then dried at normal temperature. After drying, a 5 mass% Nafion (registered trademark) solution (274704-100ML, manufactured by Sigma-Aldrich) was added dropwise onto the GC disk to a film thickness of 50 nm, and then dried at normal temperature.

### (2) CV Measurement

The measurement was performed using an electrochemical measurement system HZ-7000 manufactured by Hokuto Denko Corporation. A 0.1 mol/L aqueous HClO₄ solution was bubbled with a nitrogen gas for 1 hour or longer, and then cleaning was performed 300 times using a hydrogen electrode (RHE) as a reference electrode, in a potential range of 0.0 to 1.0 V (vs. RHE) at a sweep rate of 0.5 V/s.

### (3) Potential Cycling Test

The electrolytic solution (aqueous HClO₄ solution) used in the evaluation of ECSA was bubbled with a nitrogen gas for 1 hour or longer, and then a square wave cycling test between 0.6 V and 1.0 V (vs. RHE) was performed 140,000 times.

### (4) Evaluation of ECSA

The electrolytic solution (aqueous HClO₄ solution) used in the potential cycling test was bubbled with an oxygen gas for 1 hour or longer, and then CV measurement was performed in a potential range of 0.0 to 1.0 V (vs. RHE). ECSA analysis was performed using a hydrogen adsorption wave found in a potential region that is more negative than 0.4 V The analysis was performed at two points, the 500th and 140,000th cycles of potential cycling.

### (5) Calculation of ECSA Retention Rate

The ECSA at the 140,000th cycle of potential cycling was divided by the ECSA at the 1000th cycle of potential cycling and multiplied by 100, and the obtained value was used as the ECSA retention rate (%). In order to prevent variations in measurement conditions caused by insufficient cleaning, the 1000th cycle of potential cycling was used as the reference for calculating the ECSA.

**Table 1**

| | Carbon support | | | | | | | Catalyst metal particles | | Electrode catalyst | | |
|---|---|---|---|---|---|---|---|---|---|---|---|---|
| | Material | Modal pore size R (nm) | Mean particle size D (µm) | Total surface area per unit mass S_{A} (m²/g) | Total pore surface area per unit mass S_{P} (m²/g) | [S_{P}/S_{A}]×100 (%) | Amount of acidic group per unit mass (mmol/g) | Metal species | Mean particle size r (nm) | r/R | ECSA retention rate (%) | ECSA after 140,000 cycles (m²/g-Pt) |
| Ex. 1 | Mesoporous | 10.8 | 3.3 | 1007 | 979 | 97 | 0.9 | Pt | 1.8 | 0.17 | 186% | 125.0 |
| Ex. 2 | Mesoporous | 10.8 | 3.3 | 1007 | 979 | 97 | 0.9 | Pt | 3.9 | 0.36 | 134% | 67.2 |
| Ex. 3 | Mesoporous | 10.8 | 3.3 | 1007 | 979 | 97 | 0.9 | Pt | 1.3 | 0.12 | 167% | 108.9 |
| Ex. 4 | Mesoporous | 4.0 | 0.11 | 1411 | 1315 | 93 | 1.0 | Pt | 2.2 | 0.54 | 155% | 128.3 |
| Ex. 5 | Mesoporous | 27.9 | 3.5 | 746 | 712 | 95 | 0.8 | Pt | 1.8 | 0.06 | 147% | 107.0 |
| Com. Ex. 1 | Mesoporous | 10.8 | 3.3 | 1007 | 979 | 97 | 0.9 | Pt | 7.0 | 0.64 | 67% | 11.0 |
| Com. Ex. 2 | Mesoporous | 4.0 | 0.11 | 1411 | 1315 | 93 | 1.0 | Pt | 3.7 | 0.92 | 86% | 33.5 |
| Com. Ex. 3 | Mesoporous | 27.9 | 3.5 | 746 | 712 | 95 | 0.8 | Pt | 6.9 | 0.25 | 88% | 16.3 |
| Com. Ex. 4 | Hollow | - | 4.0 | 813 | 536 | 66 | 0.1 | Pt | 2.7 | - | 59% | 43.0 |

It is clearly seen from the results shown in Table 1 that, in the electrode catalysts obtained in the examples, not only degradation of catalytic action over time is suppressed, but also the catalytic action improves over time.

Note that, although not shown in the table, the total surface area per unit mass and the total pore surface and total pore volume per unit mass of the electrode catalysts obtained in the examples were measured, and in every example, all of these values were reduced when compared to those of the support before supporting the platinum particles. This confirmed that the catalyst metal particles were supported inside the pores of the support.

### Industrial Applicability

According to the present invention, an electrode catalyst and a fuel cell in which degradation of catalytic action over time is suppressed are provided. Also, according to the present invention, a method with which such an electrode catalyst can be easily produced is provided.

## Claims

1. An electrode catalyst comprising:
a mesoporous carbon support having pores; and
catalyst metal particles supported in at least some of the pores,
wherein a ratio r/R of a mean particle size r of the catalyst metal particles to a modal pore size R of the pores is from 0.01 to 0.6, and the mean particle size r is 6 nm or less.

2. The electrode catalyst according to claim 1, wherein the modal pore size R is from 2 to 50 nm.

3. The electrode catalyst according to claim 1 or 2, wherein a total pore surface area per unit mass of the mesoporous carbon support is 80% or more of a total surface area per unit mass of the mesoporous carbon support.

4. The electrode catalyst according to any one of claims 1 to 3, wherein the mesoporous carbon support is in particle form and has a mean particle size of 0.1 µm or greater and 50 µm or less.

5. The electrode catalyst according to any one of claims 1 to 4, wherein the catalyst metal particles contain at least a platinum group element.

6. A method for producing an electrode catalyst, comprising:
freezing a dispersion liquid containing a mesoporous carbon support having pores, a catalyst metal source compound, and a liquid medium capable of reducung the catalyst metal source compound, to obtain a frozen body;
deaerating a system containing the frozen body to allow the system to be in a reduced pressure state;
thawing the frozen body to obtain a dispersion liquid while maintaining the reduced pressure state; and
heating the dispersion liquid to form catalyst metal particles from the catalyst metal source compound.

7. An electrode catalyst for a fuel cell, comprising the electrode catalyst according to any one of claims 1 to 5.

8. A fuel cell comprising the electrode catalyst for a fuel cell according to claim 7.
